# EUROPEAN PATENT APPLICATION

(11) **EP 3 674 000 A1**
(43) Date of publication of application: **01.07.2020**
(21) Application number: 19215286.6
(22) Date of filing: 11.12.2019
(51) Int. Cl.: B01L 3/00

(54) **DETECTION METHOD, DEVICE AND CARTRIDGE FOR ENHANCING DETECTION SIGNAL INTENSITY**

(30) Priority: 26.12.2018 US 201862785043 P; 28.08.2019 CN 201910800830
(71) Applicant: Delta Electronics, Inc., Taoyuan City 333 (TW)
(72) Inventor: Chiou, Chi-Han, Taoyuan City 333, Taiwan, R.O.C. (TW); Liao, Shu-Hsien, Taoyuan City 333, Taiwan, R.O.C. (TW); Tsai, Yu-Hsuan, Taoyuan City 333, Taiwan, R.O.C. (TW); Chang, Ching-Yu, Taoyuan City 333, Taiwan, R.O.C. (TW)
(74) Representative: Uexküll & Stolberg

(57) **Abstract**

A detection method for enhancing detection signal intensity is provided. The detection method includes the following steps. Firstly, a detection device (2) is provided. The detection device (2) includes a channel (21), an inlet port (22) and an air chamber (23). The air chamber (23) includes an elastic layer (231). A bonding material (24) is immobilized in the channel (21) and served as a reaction area. Then, a sample (3) containing a detection material (31) is loaded into the inlet port (22). As the elastic layer (231) is moved upwardly and downwardly, the sample (3) is moved toward the air chamber (23) and the inlet port (22) in a reciprocating manner. Consequently, the possibility of combining the detection material (31) of the sample (3) with the bonding material (24) in the reaction area is increased. Afterwards, an optical signal from the reaction area is measured.

## Description

### FIELD OF THE INVENTION

The present invention relates to a detection method, a detection device and a detection cartridge for enhancing detection signal intensity, and more particularly to a detection method, a detection device and a detection cartridge for enhancing detection signal intensity for in vitro detection.

### BACKGROUND OF THE INVENTION

A biological detection device is employed to allow a specific biological material (such as nucleic acid or protein) contained in the device to specifically react with another specific biological material in the sample to be tested, and the reaction is quantified by various sensors or sensing substances, so as to evaluate the biological reaction. For example, a conventional biological detection cartridge implements the biological detection according to a lateral flow chromatography technology. By using a large-pore microporous membrane as a carrier, e.g., a nitrocellulose membrane (NC membrane), the specific antibody or antigen is immobilized on the NC membrane. In addition, colloidal gold particles are used as a coloring reagent to detect whether the antibody or antigen to be detected exists in the sample.

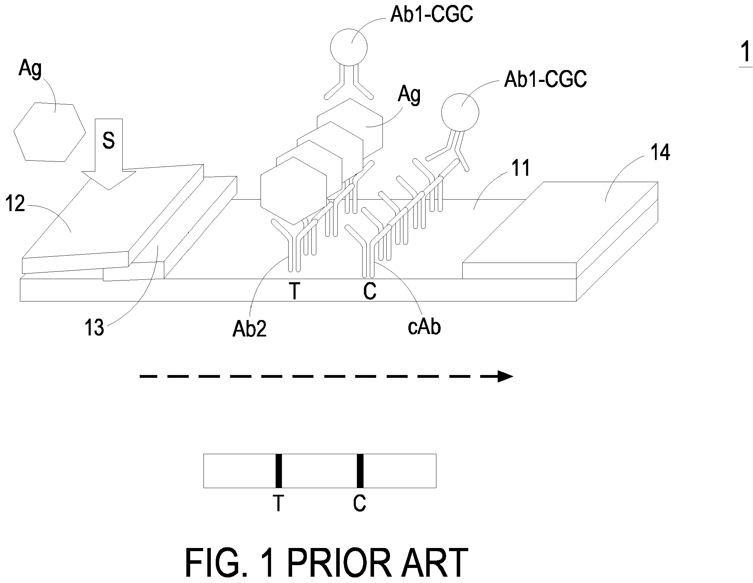

FIG. 1 schematically illustrates the concept of a conventional biological detection technology. As shown in FIG. 1, a biological detection cartridge 1 includes a NC membrane 11, a sample pad 12, a bonding pad 13 and an absorption pad 14. The bonding pad 13 bears first antibodies (Ab1-CGC) which are labeled with colloidal gold particles. A test line T of the NC membrane 11 is immobilized with second antibodies Ab2. A control line C of the NC membrane 11 is immobilized with control antibodies cAb. When a sample S to be tested is dropped on the sample pad 12 at one end of the biological detection cartridge 1, the sample S moves laterally by capillary action along the direction indicated by the arrow, and allows the antigens Ag in the sample to have a specific immune reaction with the first antibodies (Ab1-CGC) on the bonding pad 13. Then, the sample S is transferred to the NC membrane 11, and the antigens Ag in the sample S are captured by the second antibodies Ab2 immobilized on the surface of the NC membrane 11. After a time period, the immune complexes are gathered at the test line T as a colored line, and thus the detection result can be obtained with the naked eyes. If both of the test line T and the control line C are colored, the positive result is obtained. The other unbound labeled molecules pass the test line T and are absorbed by the absorption pad 14.

Although these biological detection cartridges can meet the real-time testing requirement and the point-of-care testing requirement, there are still some drawbacks. For example, since the amount of the loaded sample is not precisely controlled, the detection precision is adversely affected. Moreover, if no signals are captured by the test line, the sample cannot be returned back because the lateral flow of the sample is in the one-way direction. In addition, if the concentration of the analyst in the sample is very low, it is necessary to take a long response time to accumulate the identifiable signal on the test line. Further, the pore size of the membrane may influence the flowrate and the precision. Moreover, the paper material of the membrane may adsorb a certain volume of liquid, and the adsorbed liquid will not react with the test line, and thus, the unreacted retention volume of the liquid is generated.

For overcoming the drawbacks of the conventional technologies, there is a need of providing a detection method, a detection device and a detection cartridge for enhancing detection signal intensity in order to improve the detection sensitivity and shorten the response time.

### SUMMARY OF THE INVENTION

An object of the present invention is to provide a detection method, a detection device and a detection cartridge for enhancing detection signal intensity in order to improve the detection sensitivity and shorten the response time.

In accordance with an aspect of the present invention, a detection method for enhancing detection signal intensity is provided. The detection method includes the following steps. In a step (a), a detection device is provided. The detection device includes a channel, an inlet port and an air chamber. The inlet port is in communication with a first end of the channel, and the air chamber is in communication with a second end of the channel. The air chamber includes an elastic layer. A bonding material is immobilized in the channel and served as a reaction area. In a step (b), a sample is loaded into the inlet port, wherein the sample contains a detection material. In a step (c), the elastic layer is moved upwardly to transfer the sample in a direction toward the second end of the channel, so that a portion of the detection material is combined with the bonding material. In a step (d), the elastic layer is moved downwardly to transfer the sample in a direction toward the first end of the channel, so that another portion of the detection material is combined with the bonding material. In a step (e), the step (c) and the step (d) are repeatedly performed for at least one time. In a step (f), the elastic layer is moved downwardly to remove the sample from the reaction area. In a step (g), an optical signal from the reaction area is measured.

In an embodiment, before the step (b), the detection method further includes a step of moving the elastic layer downwardly.

In an embodiment, while the sample is transferred in the direction toward the second end of the channel in the step (c), the sample is transferred through and removed from the reaction area.

In an embodiment, while the sample is transferred in the direction toward the first end of the channel in the step (d), the sample is transferred through and removed from the reaction area.

In an embodiment, in the step (e), the step (c) and the step (d) are repeatedly performed for many times, and the sample is transferred through the reaction area in a reciprocating manner. Consequently, the possibility of combining the detection material of the sample with the bonding material in the reaction area is increased.

In an embodiment, the detection device further includes a driving module. The driving module is connected with the elastic layer to provide a force to move the elastic layer upwardly or downwardly, so that the sample is transferred in the channel.

In an embodiment, the driving module includes a pressing element and an actuator. The actuator drives the pressing element to provide the force to the elastic layer.

In an embodiment, the detection device further includes an optical sensing module, and the optical sensing module is located at two opposite sides of the bonding material so as to measure the optical signal from the reaction area.

In an embodiment, the bonding material is immobilized on a carrier, and the carrier is fixed on an inner wall of the channel. The carrier is separated from the inlet port and the air chamber.

In accordance with another aspect of the present invention, a detection device for enhancing detection signal intensity is provided. The detection device includes a channel, an inlet port, an air chamber, a bonding material and a driving module. The inlet port is in communication with a first end of the channel. A sample containing a detection material is loaded into the inlet port. The air chamber is in communication with a second end of the channel, and includes an elastic layer. The bonding material is immobilized in the channel and served as a reaction area. The driving module is connected with the elastic layer to provide a force to move the elastic layer upwardly or downwardly. Consequently, the sample is transferred in the channel and the sample is transferred through the reaction area in a reciprocating manner.

In an embodiment, the driving module includes a pressing element and an actuator. The actuator drives the pressing element to provide the force to the elastic layer.

In an embodiment, the detection device further includes an optical sensing module, and the optical sensing module is located at two opposite sides of the bonding material so as to measure an optical signal from the reaction area.

In an embodiment, the bonding material is immobilized on a carrier, and the carrier is fixed on an inner wall of the channel. The carrier is separated from the inlet port and the air chamber.

In accordance with a further aspect of the present invention, a detection cartridge for enhancing detection signal intensity is provided. The detection cartridge includes a channel, an inlet port, an air chamber and a bonding material. The inlet port is in communication with a first end of the channel. A sample containing a detection material is loaded into the inlet port. An air chamber is in communication with a second end of the channel, and includes an elastic layer. The bonding material is immobilized in the channel and served as a reaction area. The elastic layer is connected with the driving module, and the driving module provides a force to deform the elastic layer along two opposite directions in a reciprocating manner, so that a space within the air chamber is subjected to a change. In response to the change of the space within the air chamber, the sample is transferred to the first end of the channel and to the second end of the channel alternately and the sample is transferred through the reaction area in a reciprocating manner.

The above contents of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the concept of a conventional biological detection technology;
FIG. 2 is a schematic sectional view illustrating a detection device for enhancing detection signal intensity according to an embodiment of the present invention;
FIGS. 3A to 3I schematically illustrate a detection method for enhancing detection signal intensity according to an embodiment of the present invention;
FIG. 4 is a plot illustrating the relationships between the quantized differences and the press counts as listed in the first example;
FIG. 5 schematically illustrates the images of the reaction area of the detection device corresponding to different press counts; and
FIG. 6 is a plot illustrating the relationships between the quantized differences and the colloidal gold dilution factors as listed in the second example.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed. The drawings of all the embodiments of the present invention are merely schematic and do not represent true dimensions and proportions. Besides, the orientations "upper" and "lower" as used in the following embodiments are merely used to indicate relative positional relationships, and are not intended to limit the present invention.

The present invention provides a detection method, a detection device and a detection cartridge for enhancing detection signal intensity. Since the signals of the particles or molecules in biological detection are enhanced, the detection result can be obtained more accurately and quickly. When the detection device of the present invention is applied to disease detection, the appropriate treatment can be adopted more timely to avoid delaying the disease treatment. For enhancing the detection signal intensity, the present invention employs a driving module to drive the movement of a sample within a channel of the detection device, so that the sample is able to flow through a reaction area in the channel in a reciprocating manner, and a detection material in the sample is combined with a bonding material in the reaction area. In comparison with the conventional rapid test kit, which uses the lateral flow chromatography technology and has the disadvantages of only single flow in the single direction, the number of times the sample flows through the detection device of the present invention is largely increased. Consequently, the possibility of colliding and combining the detection material with the bonding material is increased. Since the detection signal intensity is enhanced, the detection sensitivity is improved and the response time is shortened.

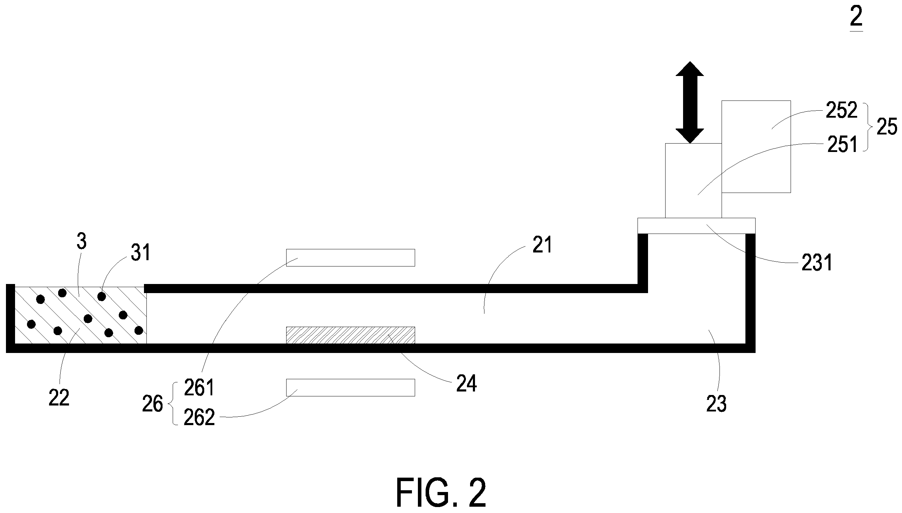

FIG. 2 is a schematic sectional view illustrating a detection device for enhancing detection signal intensity according to an embodiment of the present invention. As shown in FIG. 2, the detection device 2 includes a detection cartridge and a driving module 25. The detection cartridge includes a channel 21, an inlet port 22, an air chamber 23, a bonding material 24 and an elastic layer 231. The inlet port 22 is in communication with a first end of the channel 21. A sample 3 can be introduced into the inlet port 22, and the sample 3 contains a detection material 31. The air chamber 23 is in communication with a second end of the channel 21. The elastic layer 231 is located on the air chamber 23 to cover the air chamber 23. In an embodiment, the first end and the second end of the channel 21 are located at two opposite sides of the channel 21, respectively. The bonding material 24 is immobilized in the channel 21 and arranged between the first end and the second end of the channel 21, and may be slightly close to the first end of the channel 21. The region containing the bonding material 24 is served as a reaction area of the detection device 2. The bonding material 24 is able to have a specific reaction with the detection material 31 in the sample 3, and thus the bonding material 24 and the detection material 31 are combined together. The driving module 25 is connected with the elastic layer 231 and configured to provide an upward force or a downward force to the elastic layer 231 in order to drive movement of the sample 3 in the channel 21 in a reciprocating manner. As the sample 3 is moved in the channel 21 in the reciprocating manner, the sample 3 repeatedly flows through the bonding material 24. Consequently, the possibility of combining the detection material 31 of the sample 3 with the bonding material 24 is increased, and thus the detection signal intensity is enhanced.

In an embodiment, the detection device 2 further includes an optical sensing module 26. The optical sensing module 26 is located at two opposite sides of the bonding material 24, and configured to measure the optical signal from the reaction area.

In an embodiment, the detection device 2 further includes a casing (not shown). The driving module 25 and the optical sensing module 26 are accommodated within the casing. The casing includes an accommodation space for accommodating the detection cartridge therein.

In an embodiment, the driving module 25 includes a pressing element 251 and an actuator 252. The pressing element 251 is connected with the elastic layer 231 and the actuator 252. Under control of a control unit (not shown), the actuator 252 is enabled to drive the pressing element 251 to provide an upward force or a downward force to the elastic layer 231. By the force applied to the elastic layer 231, the elastic layer 231 is subjected to deformation, and the pressure in the air chamber 23 is changed, which drives the flow of the sample 3 within the channel 21. In such way, the sample 3 is transferred through and removed from the reaction area in the reciprocating manner. Since the possibility of combining the detection material 31 of the sample 3 with the bonding material 24 is increased, the detection signal intensity is enhanced.

For example, in case that the pressing element 251 provides a downward force to the elastic layer 231, the elastic layer 231 is subjected to a downward deformation. Since the space within the air chamber 23 is shrunken to generate a positive pressure, the sample 3 is forced to be moved in the direction toward the first end of the channel 21. In case that the pressing element 251 provides an upward force to the elastic layer 231, for example the elastic layer 231 is uplifted or the elastic layer 231 is returned to its original position by removing the external force, the space within the air chamber 23 is expanded to generate a negative pressure. Consequently, the sample 3 is forced to be moved in the direction toward the second end of the channel 21. In such way, the driving module 25 drives the upward deformation and the downward deformation of the elastic layer 231 alternately.

In an embodiment, the elastic layer 231 is made of an elastically-deformable material. For example, the elastically-deformable material includes but is not limited to rubber or foam.

In an embodiment, the actuator 252 is a stepped motor, but not limited thereto. The pressing element 251 and the actuator 252 may be controlled by the control unit in a programmable manner, so that the pressing element 251 is controlled to press the elastic layer 231 according to a predetermined program. For example, the pressing depth, the pressing velocity and the press count of the pressing element 251 are adjustable according to the practical requirements. Consequently, the flowing condition of the sample 3 in the channel 21 can be controlled more precisely.

In another embodiment, the driving module 25 may be replaced by a hand of the user. By pressing the elastic layer 231 with the hand, the pressure in the air chamber 23 may also be changed to drive the sample 3 to be transferred through and removed from the reaction area in the reciprocating manner.

In an embodiment, the optical sensing module 26 includes a light source 261 and an optical detector 262, which are located in an upper side and a lower side of the channel 21, respectively. That is, the light source 261 and the optical detector 262 are located at two opposite sides of the bonding material 24. It is noted that the installation positions of the light source 261 and the optical detector 262 are not restricted to those as shown in FIG. 2. For example, the light source 261 is located in a lower side the bonding material 24 and the optical detector 262 is located in an upper side the bonding material 24. In an embodiment, the light source 261 includes but is not limited to a light emitting diode (LED), and is used to emit an effective light signal for detection. The optical detector 262 includes but is not limited to a photodiode, and is used for receiving the light signal and obtaining an analysis result according to the light signal. Consequently, the concentration of the detection material 31 is analyzed.

In an embodiment, the channel 21 is made of a light-transmissible material, such as polyethylene terephthalate (PET), polycarbonate (PC), polystyrene (PS), acrylic resin or glass, but not limited thereto. The light-transmissible material for forming the channel 21 is not restricted as long as the optical detection or the observation with naked eyes is applicable.

In an embodiment, the channel 21, the inlet port 22 and the air chamber 23 are integrated as a one-piece structure, but not limited thereto. Alternatively, the channel 21, the inlet port 22 and the air chamber 23 may be separate components and assembled with each other. In another embodiment, the channel 21 includes a detachable top lid (not shown), which is assembled to the channel 21 after the bonding material 24 is immobilized in the channel 21.

In an embodiment, the sample 3 may be a biological sample (e.g., whole blood, serum, saliva, urine, nasal mucus, sputum or other tissue fluid), a food, an environmental substance, a microorganism, or any combination thereof, but is not limited thereto. Preferably but not exclusively, the detection material 31 of the sample 3 is an antibody, an antigen, a nucleic acid, or any other appropriate chemical compound.

In an embodiment, before the sample 3 is loaded into the inlet port 22, the sample 3 is subjected to pretreatment such as the purification, the removal of interfering factors or the addition of the labeled molecules that can be combined with the detection material 31. For example, the labeled molecules include antibodies, antigens, nucleic acids or other chemical compound labeled with colloidal gold particles, fluorescent dyes, or other labels.

In an embodiment, the bonding material 24 is an antibody, an antigen, a nucleic acid, or any other appropriate chemical compound. The example of the bonding material 24 is not restricted as long as the specific reaction between the bonding material 24 and the detection material 31 can be carried out.

In an embodiment, the bonding material 24 is immobilized on a carrier, and then the carrier with the bonding material 24 is fixed in the channel 21. Preferably but not exclusively, the carrier is made of a porous material or a surface-modified material, such as a NC membrane, but not limited thereto. For example, in case that the bonding material 24 is an antibody, the antibody solution is firstly coated on the NC membrane and then the NC membrane is adhered on a proper position within the channel 21. Consequently, the bonding material 24 is immobilized. In an embodiment, the proper position of the carrier is arranged between the inlet port 22 and the air chamber 23. Preferably, the proper position of the carrier is separated from the inlet port 22 and the air chamber 23.

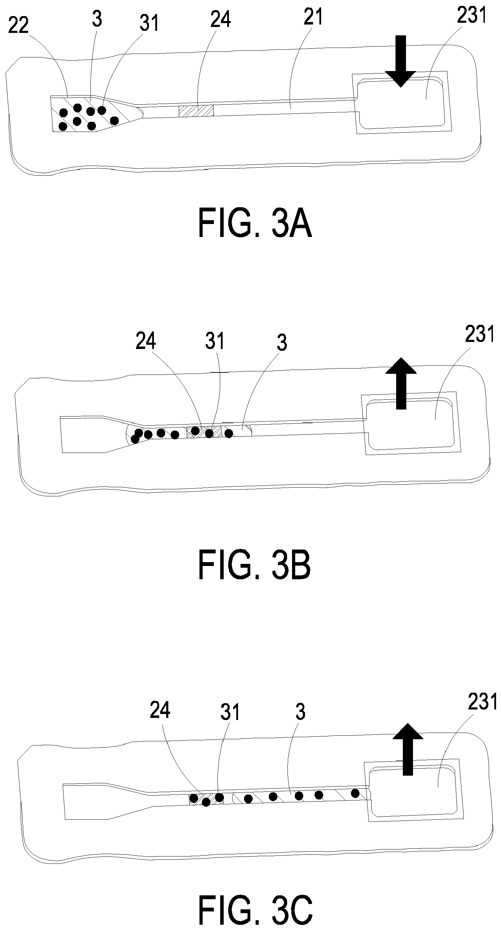

Hereinafter, a detection method will be described with reference to FIG. 2 and FIGS. 3A to 3I, wherein FIGS. 3A to 3I schematically illustrate a detection method for enhancing detection signal intensity according to an embodiment of the present invention. As shown in FIG. 3A, a downward force is first provided to the elastic layer 231. Accordingly, the elastic layer 231 is moved downwardly and thus the space within the air chamber 23 is shrunken and the gas within the air chamber 23 is exhausted. Subsequently, the sample 3 containing the detection material 31 is loaded into the inlet port 22. Then as shown in FIG. 3B, an upward force is provided to the elastic layer 231. Accordingly, the elastic layer 231 is moved upwardly and the space within the air chamber 23 is expanded to generate a negative pressure. As a result, the sample 3 is forced to be moved in the direction toward the second end of the channel 21. That is, the sample 3 is inhaled into the channel 21 and contacts with the bonding material 24 at the reaction area within the channel 21, and in the mean time, a portion of the detection material 31 in the sample 3 is combined with the bonding material 24. Then as shown in FIG. 3C, as the upward force is continuously provided to the elastic layer 231, the sample 3 is continuously moved toward the second end of the channel 21 and removed from the reaction area. While the sample 3 is transferred through the reaction area, another portion of the detection material 31 in the sample 3 is combined with the bonding material 24.

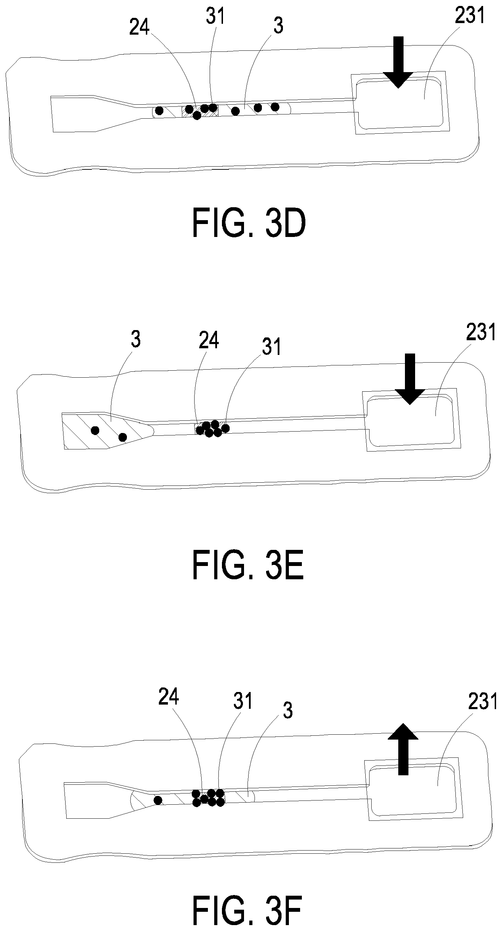

Afterward, as shown FIG. 3D, a downward force is provided to the elastic layer 231. Accordingly, the sample 3 is forced to be moved in the direction toward the first end of the channel 21. While the sample 3 is transferred through the reaction area, a further portion of the detection material 31 in the sample 3 is combined with the bonding material 24. Then as shown in FIG. 3E, as the downward force is continuously provided to the elastic layer 231, the sample 3 is continuously moved toward the first end of the channel 21 and removed from the reaction area. While the sample 3 is transferred through the reaction area, a further portion of the detection material 31 in the sample 3 is combined with the bonding material 24.

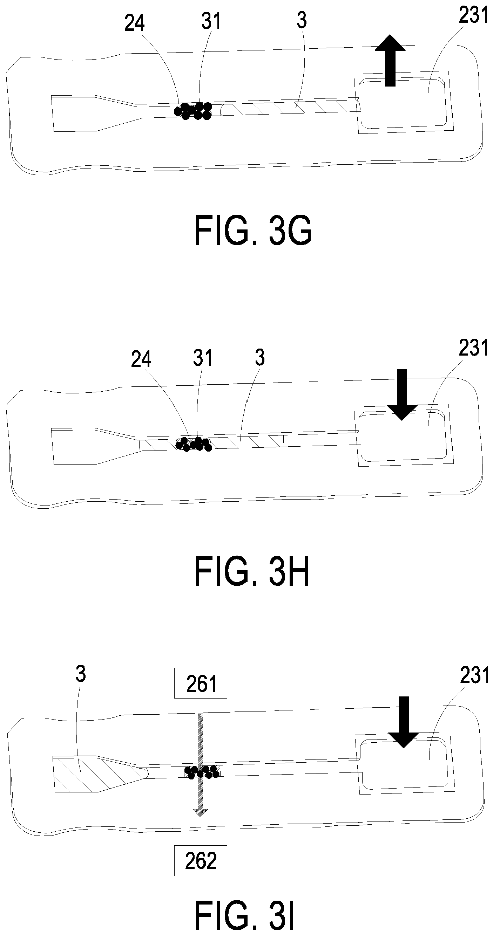

Afterward, as shown FIG. 3F, an upward force is provided to the elastic layer 231 again. Accordingly, the sample 3 is forced to be moved in the direction toward the second end of the channel 21. While the sample 3 is transferred through the reaction area, the detection material 31 in the sample 3 which is not yet combined with the bonding material 24 has a further chance to be combined with the bonding material 24. Then as shown in FIG. 3G, as the upward force is continuously provided to the elastic layer 231, the sample 3 is continuously moved toward the second end of the channel 21 and removed from the reaction area. While the sample 3 is transferred through the reaction area, the residual detection material 31 in the sample 3 has a further chance to be combined with the bonding material 24. Then as shown in FIG. 3H, a downward force is provided to the elastic layer 231. Accordingly, the sample 3 is forced to be moved in the direction toward the first end of the channel 21. While the sample 3 is transferred through the reaction area, the residual detection material 31 in the sample 3 has a further chance to be combined with the bonding material 24. The step of providing the upward force and the step of providing the downtown force are repeatedly performed for many times to enable the sample 3 to be transferred through and removed from the reaction area in the reciprocating manner. Consequently, the possibility of combining the detection material 31 of the sample 3 with the bonding material 24 is increased.

Finally, as shown in FIG. 3I, as the downward force is continuously provided to the elastic layer 231, the sample 3 is continuously moved toward the first end of the channel 21 and removed from the reaction area, and then, the entire sample 3 is transferred to the inlet port 22. When compared with the conventional rapid test kit, the channel 21 of the detection device 2 does not need to be equipped with the absorption pad. Subsequently, the optical signal from the reaction area is measured by the light source 261 and the optical detector 262 of the optical sensing module 26. According to the measuring result, the concentration of the detection material 31 is analyzed.

In the above embodiment, the downward force is provided to the elastic layer 231 (see FIG. 3A) before the sample 3 is loaded into the inlet port 22, so that the elastic layer 231 is subjected to the downward deformation, and the space within the air chamber 23 is shrunken. Thus, after the sample is loaded into the inlet port 22, the sample 3 is driven to be transferred through the reaction area by having the elastic layer 231 moved upwardly and returned to its original position. In other words, providing the upward force to the elastic layer 231 as shown in FIG. 3B is achieved by having the elastic layer 231 moved upwardly and returned to its original position. Certainly, in another embodiment, the downward force is not provided to the elastic layer 231 before the sample 3 is loaded into the inlet port 22, but after the sample 3 is loaded into the inlet port 22, the upward force is provided to the elastic layer 231, and due to the upward deformation of the elastic layer 231, the sample 3 is transferred through the reaction area.

As mentioned above, the detection method of the present invention includes the following steps. In a step (a), a detection device 2 is provided. The detection device 2 includes a channel 21, an inlet port 22 and an air chamber 23. The inlet port 22 is in communication with a first end of the channel 21, and the air chamber 23 is in communication with a second end of the channel 21. The air chamber 23 includes an elastic layer 231. A bonding material 24 is immobilized in the channel 21 and served as a reaction area. In a step (b), a sample 3 is loaded into the inlet port 22. The sample 3 contains a detection material 31. In a step (c), an upward force is provided to the elastic layer 231. Accordingly, the elastic layer 231 is moved upwardly and the sample 3 is moved in the direction toward the second end of the channel 21, so that a portion of the detection material 31 in the sample 3 is combined with the bonding material 24 within the channel 21. In a step (d), a downward force is provided to the elastic layer 231. Accordingly, the elastic layer 231 is moved downwardly and the sample 3 is moved toward the first end of the channel 21, so that another portion of the detection material 31 in the sample 3 is combined with the bonding material 24 within the channel 21. In a step (e), the step (c) and the step (d) are repeatedly performed for at least one time. In a step (f), the downward force is provided to the elastic layer 231 and the sample is removed from the reaction area. In a step (g), an optical signal from the reaction area is measured.

In an embodiment, the step (c) and the step (d) are repeatedly performed for many times. In such way, the sample 3 is transferred through and removed from the reaction area in the reciprocating manner. Consequently, the possibility of combining the detection material 31 of the sample 3 with the bonding material 24 is increased and the detection signal intensity is enhanced.

In an embodiment, the detection method further includes a step of providing a downward force to the elastic layer 231 before the step (b). That is, before the sample 3 is loaded into the inlet port 22, the downward force is provided to the elastic layer 231, so that the elastic layer 231 is subjected to the downward deformation, and the space within the air chamber 23 is shrunken.

In the step (c) of moving the sample 3 in the direction toward the second end of the channel 21, the sample 3 is transferred through and removed from the reaction area. In the step (d) of moving the sample 3 in the direction toward the first end of the channel 21, the sample 3 is transferred through and removed from the reaction area.

Hereinafter, some examples of the detection method of the present invention will be illustrated.

In a first example, 1 µL/cm of 3.7 mg/mL mouse anti-human Troponin antibody is coated on a 4 mm × 3 mm NC membrane. Then, the NC membrane is attached on the inner wall of the channel 21 of the detection device 2. Then, the channel 21 is capped by the top lid and the elastic layer 231. The prepared colloidal gold-antibody conjugate solution (OD530 = 2.9-3.1) is diluted to various dilution factors with the buffer (pH 8.2, 20 mM Tris) and uniformly mixed, and finally 20 µL of the colloidal gold-antibody conjugate solution is loaded into the inlet port 22. Experiments (n=3) are performed at the same pressing velocity (e.g., one press per second) at different press counts (e.g., 30, 60, 120, 240, 360, 480 and 600). Then, the optical signal corresponding to the image of the reaction area is measured. The image is used to quantize the signal, and the quantized difference is obtained by subtracting the grayscale value of the reaction area from the background value. The relationships between the quantized differences and the press counts are listed in Table 1.

**Table 1**

| Press count | 1 | 2 | 3 | Average | Standard deviation |
|---|---|---|---|---|---|
| 30 | 8 | 6 | 6 | 6.7 | 1.2 |
| 60 | 13 | 17 | 19 | 16.3 | 3.1 |
| 120 | 36 | 19 | 33 | 29.3 | 9.1 |
| 240 | 40 | 56 | 52 | 49.3 | 8.3 |
| 360 | 51 | 50 | 57 | 52.7 | 3.8 |
| 480 | 49 | 54 | 52 | 51.7 | 2.5 |
| 600 | 56 | 53 | 52 | 53.7 | 2.1 |

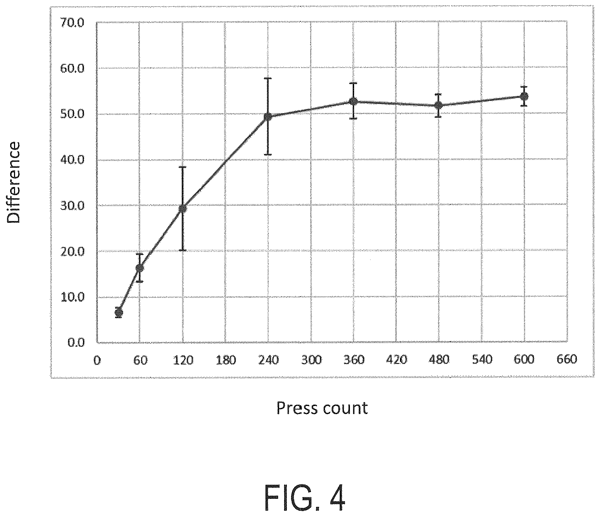

FIG. 4 is a plot illustrating the relationships between the quantized differences and the press counts as listed in the first example. It is clear that as the press count increases, the detection signal intensity increases gradually. When the press count reaches 240 and more, the detection signal intensity is almost constant. That means, the colloidal gold particles in the sample are completely bound to the reaction area, and thus the detection signal intensity is in the saturation state.

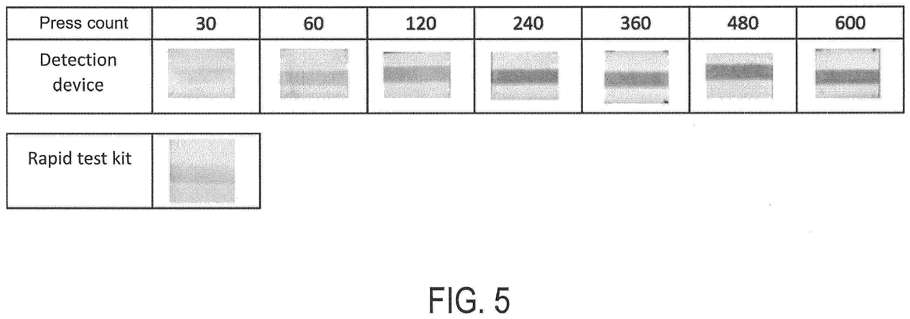

FIG. 5 schematically illustrates the images of the reaction area of the detection device corresponding to different press counts. It is clear that as the press count increases, the images of the reaction area of the detection device become darker. In contrast, the quantized difference of the conventional rapid test kit that allows for single flow in the single direction is about 23. Since the elastic layer is pressed repeatedly in the present invention, the sample is transferred through the reaction area in the reciprocating manner, and the quantized difference of the detection device in the saturation state reaches 52. In other words, the detection signal intensity is doubled, and the reaction is carried out more efficiently.

In a second example, the detection signal intensity of the conventional rapid test kit and the detection device of the present invention corresponding to different colloidal gold dilution factors (1x, 1/2x, 1/4x, 1/8x) (n=3) are compared. The experimental condition is similar to that of the first example except that the press count of this example is 100. The relationships between the quantized differences and the dilution factors for the conventional rapid test kit are listed in Table 2. The relationships between the quantized differences and the dilution factors of the detection device for the detection device of the present invention are listed in Table 3.

**Table 2**

| Conventional rapid test kit | | | | | |
|---|---|---|---|---|---|
| Dilution factor of colloidal gold | 1 | 2 | 3 | Average | Standard deviation |
| 1x | 72 | 73 | 51 | 65.3 | 12.4 |
| 1/2x | 30 | 48 | 50 | 42.7 | 11.0 |
| 1/4x | 24 | 23 | 20 | 16.3 | 4.5 |
| 1/8x | 12 | 9 | 8 | 9.7 | 2.1 |

**Table 3**

| Present detection device | | | | | |
|---|---|---|---|---|---|
| Dilution factor of colloidal gold | 1 | 2 | 3 | Average | Standard deviation |
| 1x | 99 | 106 | 99 | 101.3 | 4.0 |
| 1/2x | 60 | 58 | 57 | 58.3 | 1.5 |
| 1/4x | 24 | 23 | 23 | 23.3 | 0.6 |
| 1/8x | 12 | 18 | 16 | 15.3 | 3.1 |

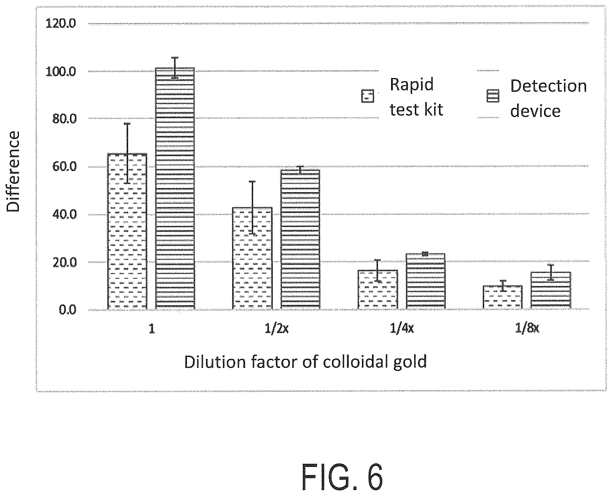

FIG. 6 is a plot illustrating the relationships between the quantized differences and the colloidal gold dilution factors as listed in the second example. From the result of FIG. 6, the detection signal intensity of the present invention is stronger than that of the conventional rapid test kit. In other words, the repeat pressing actions on the elastic layer can enhance the reaction efficiency at the reaction area.

In conclusion, the present invention provides specially designed detection method, detection device and detection cartridge. For enhancing the detection signal intensity, the present invention employs the driving module to drive the movement of the sample within the channel of the detection device. By pressing the elastic layer repeatedly, the sample is able to flow through the reaction area in the channel in a reciprocating manner, and the detection material in the sample is combined with a bonding material in the reaction area. In comparison with the conventional rapid test kit, which uses the lateral flow chromatography technology and has the disadvantages of only single flow in the single direction, the number of times the sample flows through the detection device of the present invention is largely increased. Consequently, the possibility of colliding and combining the detection material with the bonding material is increased. Moreover, due to the pneumatic actuation, the residual volume of the sample in the detection device is very small, and the required amount of the sample is reduced. In addition, due to the precise flow control, the measurement error caused by the variation of the paper material of the membrane is minimized. Moreover, after the last time of pressing the elastic layer, the sample is completely departed from the reaction area and then the optical measurement is performed. Consequently, the result of the optical measurement is not influenced by the impurity of the sample, so the detection method, the detection device and the detection cartridge of the present invention are suitable for the whole blood detection.

## Claims

1. A detection method for enhancing detection signal intensity, **characterized in that** the detection method comprises steps of:
(a) providing a detection device (2), wherein the detection device (2) comprises a channel (21), an inlet port (22) and an air chamber (23), wherein the inlet port (22) is in communication with a first end of the channel (21), the air chamber (23) is in communication with a second end of the channel (21), the air chamber (23) comprises an elastic layer (231), and a bonding material (24) is immobilized in the channel (21) and served as a reaction area;
(b) loading a sample (3) into the inlet port (22), wherein the sample (3) contains a detection material (31);
(c) moving the elastic layer (231) upwardly to transfer the sample (3) in a direction toward the second end of the channel (21), so that a portion of the detection material (31) is combined with the bonding material (24);
(d) moving the elastic layer (231) downwardly to transfer the sample (3) in a direction toward the first end of the channel (21), so that another portion of the detection material (31) is combined with the bonding material (24);
(e) repeatedly performing the step (c) and the step (d) for at least one time;
(f) moving the elastic layer (231) downwardly to remove the sample (3) from the reaction area; and
(g) measuring an optical signal from the reaction area.

2. The detection method according to claim 1, wherein before the step (b), the detection method further comprises a step of moving the elastic layer (231) downwardly.

3. The detection method according to claim 1, wherein while the sample (3) is transferred in the direction toward the second end of the channel (21) in the step (c), the sample (3) is transferred through and removed from the reaction area.

4. The detection method according to claim 1, wherein while the sample (3) is transferred in the direction toward the first end of the channel (21) in the step (d), the sample (3) is transferred through and removed from the reaction area.

5. The detection method according to claim 1, wherein in the step (e), the step (c) and the step (d) are repeatedly performed for many times, and the sample (3) is transferred through the reaction area in a reciprocating manner, so that the possibility of combining the detection material (31) of the sample (3) with the bonding material (24) in the reaction area is increased.

6. The detection method according to claim 1, wherein the detection device (2) further comprises a driving module (25), wherein the driving module (25) is connected with the elastic layer (231) to provide a force to move the elastic layer (231) upwardly or downwardly, so that the sample (3) is transferred in the channel (21).

7. The detection method according to claim 6, wherein the driving module (25) comprises a pressing element (251) and an actuator (252), wherein the actuator (252) drives the pressing element (251) to provide the force to the elastic layer (231).

8. The detection method according to claim 1, wherein the detection device (2) further comprises an optical sensing module (26), and the optical sensing module (26) is located at two opposite sides of the bonding material (24) so as to measure the optical signal from the reaction area.

9. The detection method according to claim 1, wherein the bonding material (24) is immobilized on a carrier, and the carrier is fixed on an inner wall of the channel (21), wherein the carrier is separated from the inlet port (22) and the air chamber (23).

10. A detection device (2) for enhancing detection signal intensity, **characterized in that** the detection device (2) comprises:
a channel (21);
an inlet port (22) in communication with a first end of the channel (21), wherein a sample (3) containing a detection material (31) is loaded into the inlet port (22);
an air chamber (23) in communication with a second end of the channel (21), and comprising an elastic layer (231);
a bonding material (24) immobilized in the channel (21) and served as a reaction area; and
a driving module (25) connected with the elastic layer (231) to provide a force to move the elastic layer (231) upwardly or downwardly, so that the sample (3) is transferred in the channel (21) and the sample (3) is transferred through the reaction area in a reciprocating manner.

11. The detection device (2) according to claim 10, wherein the driving module (25) comprises a pressing element (251) and an actuator (252), wherein the actuator (252) drives the pressing element (251) to provide the force to the elastic layer (231).

12. The detection device (2) according to claim 10, wherein the detection device (2) further comprises an optical sensing module (26), and the optical sensing module (26) is located at two opposite sides of the bonding material (24) so as to measure an optical signal from the reaction area.

13. The detection device (2) according to claim 10, wherein the bonding material (24) is immobilized on a carrier, and the carrier is fixed on an inner wall of the channel (21), wherein the carrier is separated from the inlet port (22) and the air chamber (23).

14. A detection cartridge for enhancing detection signal intensity, **characterized in that** the detection cartridge is connected with a driving module (25), and the detection cartridge comprises:
a channel (21);
an inlet port (22) in communication with a first end of the channel (21), wherein a sample (3) containing a detection material (31) is loaded into the inlet port (22);
an air chamber (23) in communication with a second end of the channel (21), and comprising an elastic layer (231); and
a bonding material (24) immobilized in the channel (21) and served as a reaction area,
wherein the elastic layer (231) is connected with the driving module (25), and the driving module (25) provides a force to deform the elastic layer (231) along two opposite directions in a reciprocating manner, so that a space within the air chamber (23) is subjected to a change, wherein in response to the change of the space within the air chamber (23), the sample (3) is transferred to the first end of the channel (21) and to the second end of the channel (21) alternately and the sample (3) is transferred through the reaction area in a reciprocating manner.
